# EUROPÄISCHE PATENTSCHRIFT

(11) **EP 1 438 825 B1**
(45) Veröffentlichungstag und Bekanntmachung des Hinweises auf die Patenterteilung: **09.02.2005**
(21) Anmeldenummer: 02776724.3
(22) Anmeldetag: 25.09.2002
(51) Int. Cl.: H04L 29/06

(54) **VERFAHREN UND VORRICHTUNGEN ZUR HEADER-KOMPRESSION IN PAKETORIENTIERTEN NETZWERKEN**
METHOD AND DEVICES FOR HEADER COMPRESSION IN PACKET-ORIENTED NETWORKS
PROCEDE ET DISPOSITIFS DE COMPRESSION D'EN-TETES DANS DES RESEAUX ORIENTES PAQUETS

(30) Priorität: 27.09.2001 DE 10147755
(43) Veröffentlichungstag der Anmeldung: 21.07.2004
(73) Patentinhaber: SIEMENS AKTIENGESELLSCHAFT, 80333 München (DE)
(72) Erfinder: GRIMMINGER, Jochen, 80638 München (DE); HUTH, Hans-Peter, 80638 München (DE)
(86) Internationale Anmeldenummer: PCT/DE2002/003629
(87) Internationale Veröffentlichungsnummer: WO 2003/030485

(56) Entgegenhaltungen:
- EP-A- 1 220 508
- WO-A-00/48374
- KOLEYNI G ET AL: "Requirements and framework for ATM network interworking over MPLS" INTERNET DRAFT, [Online] - Mai 2001 (2001-05) Seiten 1-14, XP002232003 Gefunden im Internet: <URL:http://www.watersprings.org/pub/id/dr aft-koleyni-pwe3-atm-over-mpls-00.txt> [gefunden am 2003-02-20]
- MILLER B: "Label-Switching Technique Helps Transmit Voice over IP Networks" EMBEDDED DEVELOPERS JOURNAL, [Online] - Oktober 2000 (2000-10) Seiten 1-5, XP002232004 Gefunden im Internet: <URL:http://www.integralaccess.com/pdf/VoM PLS.pdf> [gefunden am 2003-02-19]
- KANKKUNEN A ET AL: "VoIP over MPLS Framework" INTERNET DRAFT, [Online] - Juli 2000 (2000-07) Seiten 1-58, XP002232005 Gefunden im Internet: <URL:http://www.watersprings.org/pub/id/dr aft-kankkunen-vompls-fw-01.txt> [gefunden am 2003-02-19]
- BERGER L ET AL: "MPLS/IP Header Compression" INTERNET DRAFT, [Online] - Januar 2000 (2000-01) Seiten 1-14, XP002232006 Gefunden im Internet: <URL:http://www.watersprings.org/pub/id/dr aft-berger-mpls-hdr-comp-00.txt> [gefunden am 2003-02-19]
- SWALLOW G ET AL: "Simple Header Compression" INTERNET DRAFT, [Online] - März 2000 (2000-03) Seiten 1-11, XP002232007 Gefunden im Internet: <URL:http://www.watersprings.org/pub/id/dr aft-swallow-mpls-simple-hdr-compress-00.tx t> [gefunden am 2003-02-19]

## Beschreibung

Durch die Einführung von paketorientierten Technologien wie UMTS und GPRS ist zu erwarten, dass die Datenübertragung in Zukunft vermehrt drahtlos erfolgen wird. Hierbei wird sich die Datenübertragung nicht nur auf die Übertragung von Sprachinformationen beschränken lassen, sondern es werden vermehrt andere Dienste, wie sie z. B. im Internet angeboten werden, drahtlos genutzt.
Momentan sind die meisten Mobilfunknetze verbindungsorientiert aufgebaut. Diese Verbindungsorientierung liegt zumindest zwischen dem Endgerät und der Basisstation vor. Die Backbone-Netze weisen hingegen oftmals eine paketorientierte Struktur auf. Gerade bei Sprach- und Datenübertragungen wird jedoch nicht die ganze Bandbreite benötigt, da eine Datenübertragung nur zu diskreten Zeitpunkten erfolgt und oftmals ein großer Zeitraum zwischen den einzelnen, tatsächlichen Informationsübertragungen liegt. Somit wird ein Großteil der Bandbreite verschenkt. Paketorientierte Netzwerke haben den Vorteil, dass lediglich die benötigte Bandbreite durch Pakete verbraucht wird. Der Datenstrom wird hierbei in kleine Pakete zerlegt. Nachteilig ist jedoch bei diesem Ansatz, dass unter Umständen bei einem größeren Bedarf nicht genügend Bandbreite vorhanden ist. Dies führt gerade bei Sprachübertragungen zu einem erheblichen Qualitätsverlust, der sich in einer schlechten Tonqualität widerspiegelt. Ein Qualitätsmanagement ist für solche Netzwerke notwendig. Weiterhin ist es notwendig, dass die Datenpakete schneller durch das Netzwerk geleitet werden. Um dies zu erreichen, sind schnelle Switches und Router gefragt.
Um in Zukunft auch dem vermehrten Datenaufkommen bei kabellosen Teilnehmern gerecht zu werden, werden Zugangsnetze für Mobilfunknetze in Zukunft auch IP-basiert sein, d. h. zwischen den Basisstationen und dem Übergang in das Core-Netzwerk liegt ein IP-basiertes Transportnetz, das so genannte RAN (Radio Access Network). Endgeräte verbinden sich über eine Luftschnittstelle zunächst mit einer Basisstation BS, welche die Luftschnittstelle terminiert. Sodann werden die Daten des Endgerätes MH durch einen Zugangsrouter AR geroutet. In der Regel bilden die miteinander verbundenen Zugangsrouter das Radio-Access-Netzwerk. Der AR sorgt für die Weiterleitung an den Radio-Access-Server (RAS) oder weitere Router.
Aufgrund der unterschiedlichen Topologien der Netzwerke wird oftmals ein Protokolltunnel zwischen Endgerät MH und Zugangsrouter RAS bzw. zwischen AR und RAS aufgebaut. Ein Protokolltunnel liegt immer dann vor, wenn ein erstes Übertragungsprotokoll in einem zweiten Übertragungsprotokoll gekapselt ist. Man spricht vom Einpacken der Pakete eines ersten Übertragungsprotokolls in die Pakete des zweiten Übertragungsprotokolls. Dies ist z. B. immer dann notwendig, wenn auf einem Netzwerk-Segment das erste Übertragungsprotokoll nicht unterstützt wird. In diesem Netzwerksegment muss dann das Paket mit Hilfe des zweiten Übertragungsprotokolls geroutet werden. Durch den Protokolltunnel ist eine Reihe von Vorteilen gegeben.
Für das Endgerät kann im Transportnetz RAN Mobilität mit beliebigen Mitteln transparent unterstützt werden. Dieser Vorteil basiert darauf, dass die Pakete nicht verändert werden und somit die Art und Form des Transportes durch die Topologie des Netzwerkes bestimmt werden können, ohne dass eine Veränderung der Nutzdaten zu befürchten ist.
Nicht IP-basierte Daten (z. B. komprimierte oder verschlüsselte IP-Pakete, Sprache) können einfach über das Transportnetz RAN zu entsprechenden Umsetzern am Rand des Transportnetzes RAN geführt werden, sofern die verwendete Tunneltechnologie den Transport von Datenpaketen anderer Protokolle als IP unterstützt.
Bekannte Verfahren benutzen Tunnel entweder vom Endgerät MH bis zum RAS oder vom Zugangsrouter AR zum RAS. Dabei können unterschiedliche Technologien zum Einsatz kommen, z. B. PPP, IP-in-IP.

Auf Grund des simplen Aufbaus und der hohen Performance kann auch das Multiprotocol Label Switching (MPLS, IETF Proposed Standard, [RFC 3031]) mit Vorteil als Tunneltechnologie eingesetzt werden.

Bei MPLS Netzen wandert ein Paket von einem Router zum nächsten. Jeder Router trifft eine unabhängige Entscheidung hinsichtlich des Weiterleitens. Das heißt, jeder Router analysiert den Header des Paketes, und jeder Router durchläuft ein Programm mit dem Router-Algorithmus. Jeder Router wählt eine neue Route in Abhängigkeit des Ergebnisses des Router-Algorithmus. Die Auswahl der nächsten Route erfolgt somit in zwei Schritten. Der erste Schritt partitioniert die gesamte Menge der möglichen Pakete in eine Menge von äquivalenten Klassen (FEC). Der zweite Schritt bildet jede FEC auf eine Route ab. Was die Entscheidung der Weiterleitung angeht, wird keine Unterscheidung zwischen den Paketen gemacht, die der gleichen FEC angehören. Unterschiedliche Pakete, die der gleichen FEC angehören, können nicht unterschieden werden. Hierin unterscheidet sich die vorliegende Erfindung vom Stand der Technik. Um Labels als Adressen verwenden zu können, muss eine eindeutige Zuordnung zu einer FEC bestehen. Das heißt, eine FEC umfasst immer nur ein Label. Dieses Label wird nur einer Zieladresse zugeordnet.
Als unterschiedliche Pakete betrachtet man die Pakete, die eine unterschiedliche Ziel- oder Ursprungsadresse aufweisen. Um jedoch MPLS für die vorliegende Erfindung verwenden zu können, muss ein Pfad und somit die Äquivalenzklasse eindeutig sein. Das heißt, eine Äquivalenzklasse steht für ein eindeutiges Quell- und Ziel-Endgerät bzw. Entity. In einem MPLS-Netz erfolgt die Zuordnung zu einer FEC nur einmal, nämlich dann, wenn das Paket in das Netzwerk eintritt. Die FEC, der ein Paket zugeordnet ist, ist als kurzer Wert codiert, der als Label bezeichnet wird. Wenn ein Paket zur nächsten Route gesendet wird, so wird das Label mitgesandt. Bei den folgenden Routern wird keinerlei Analyse der weiteren Inhalte des Paketes vorgenommen. Es wird lediglich das Label überprüft. Das Label wird als Index für eine Tabelle verwendet, aus der die nächste Route und das nächste Label entnommen werden können. Das alte Label wird durch das neue Label ersetzt und das Paket wird weitergeleitet in die nächste Route. In einem MPLS-Netz wird das Weiterleiten nur durch die Labels gesteuert. Dies hat eine Reihe von Vorteilen. So müssen die Router nur geringe Fähigkeiten haben. Sie müssen lediglich in der Lage sein, das Label zu analysieren und in einer Tabelle zu überprüfen, welche Route diesem Label zugeordnet ist, um das alte Label durch ein neues Label zu ersetzen. Weiterhin kann durch diese einfachen Aufgaben ein hoher Durchsatz realisiert werden. Weitere Vorteile können der [RFC 3031] entnommen werden.

Im Folgenden werden einige Grundsätze definiert. Ein Label ist ein kurzer, örtlich signifikanter Bezeichner, der eine feste Länge aufweist, um eine FEC zu identifizieren. Das Label dient zur Repräsentation einer FEC, der das Paket zugeordnet ist. In der grundsätzlichen Verwendung der FEC wird diese auf der Grundlage der Zieladressen des Netzwerk-Layers zugeordnet. Es handelt sich jedoch in der ursprünglichen Verwendung der FEC nicht um eine Kodierung der Netzwerkadresse. Genau an diesem Punkt macht die vorliegende Erfindung einen Unterschied. Durch die eindeutige Zuordnung des Labels zu einem eindeutigen Pfad handelt es sich um eine Kodierung einer Netzwerkadresse.

Um sicherzustellen, dass die Router die Pakete denselben Äquivalenzklassen zuordnen, müssen die Router regelmäßig Informationen austauschen, aus denen ersichtlich ist, welche Pakete einem Label zugeordnet werden. Weiterhin ist es wichtig, dass nicht dieselben Labels von unterschiedlichen Routern verwandt werden, soweit hierdurch eine eindeutige Identifikation des vorhergehenden Routers unmöglich wird. Weiterhin ist darauf hinzuweisen, dass Up-Streams und Down-Streams unterschiedlich behandelt werden. So weisen diese nicht unbedingt dieselben Labels auf. In der MPLS-Architektur wird die Entscheidung, ein bestimmtes Label an eine bestimmte Äquivalenzklasse zu binden, durch den Router vorgenommen, der Down-Stream in Bezug zu dieser Bindung ist. Der Router, der Down-Stream ist, informiert dann den Router, der Up-Stream ist, von dieser Bindung. Diese Information kann z. B. als Huckepackinformation auf anderen Paketen übertragen werden.

In einer weiteren Ausgestaltung unterstützt MPLS eine Hierarchie, wobei das Bearbeiten der mit Labeln versehenen Pakete vollständig unabhängig von dem Level der Hierarchie ist. Ein Paket, das kein Label aufweist, kann als Paket betrachtet werden, dessen Stack leer ist. Die Verwendung des Stacks wird deutlich, wenn man vom Tunneln der Pakete spricht. Ein solches Tunneln kann dem Dokument [RFC 3031] entnommen werden. Pakete werden immer dann getunnelt, wenn sie durch einen Netzwerkpfad geführt werden, der zwischen zwei Routern liegt,
wobei dieser Netzwerkpfad wiederum eine Reihe von Routern umfassen kann. Wurde z. B. ein expliziter Pfad vorgegeben, der die Router R1 bis R4 umfasst, und liegt zwischen dem Router R1 und R2 ein Pfad, der die Router R1.1, R1.2, R1.3 umfasst, so wird ein weiteres Label durch den Router R1 auf den Stack gepusht. Die Router R1.1, R1.2, R1.3 arbeiten nun auf diesem neuen zweiten Element. Sobald das Paket bei Router R2 ankommt, wird das oberste Element vom Stack gepoppt. Problematisch wird es, wenn kein Label auf dem Stack ist. Bei der normalen MPLS-Architektur wird die Netzwerkadresse (im Normalfall die IP-Adresse) analysiert, um eine Äquivalenzklasse zu bestimmen.
MPLS bietet zwei Arten der Routenauswahl. Die eine Routenauswahl legt die Route bereits am Startpunkt fest. Es werden die einzelnen Router bestimmt, die durchlaufen werden müssen. Es handelt sich hierbei um ein explizites Routen. Beim hop-byhop-Routen werden die Router nicht explizit festgelegt, sodass jeder Router anhand seiner Tabellen festlegen kann, welches der nachfolgende Router sein soll. Die vorliegende Erfindung kann mit beiden Möglichkeiten der Routenauswahl betrieben werden.

Bisherige Ansätze zur Verwendung von MPLS gehen von einer Nutzung von MPLS im Netzinneren aus, z. B. im Mobilfunknetz zwischen Zugangsrouter AR RAS.
Wechselt das Endgerät MH im laufenden Betrieb von Router ARx zu Router ARy, so muss es sich erneut beim Zugangsrouter anmelden (Authentifizieren). Bei dieser Bewegung des Endgeräts zu einer anderen Basisstation oder einem anderen Zugangsrouter wird nun dieser Tunnel mittels Signalisierung umgelegt zum aktuellen Ankerpunkt. Dazu muss allerdings in verschiedenen Ausprägungen der Realisierung im Access-Netz IPv6 (IP Version 6) unterstützt werden. Wie das Mapping solcher Architekturen auf bestehende IP-Backbones ergeben hat, wird darin hauptsächlich eine Form von MPLS unterstützt. IP-Netze werden also als Overlay/VPN (Virtual Privat Network)-Strukturen realisiert und deren Pakete nur noch schnell geswitched, was weniger Netzlast und Overhead bei der Routeroperation bedeutet. Jedoch entsteht bei einem Tunneln der Informationen ein Overhead hinsichtlich der Größe der Informationspakete.
IPv6 Header verursachen mehr als 40 Byte Header Overhead bei einer Transportdatengröße von durchschnittlich 60 Byte (IPv6 incl. Routing Header), deren Nutzdaten wiederum nur etwa 20 Byte (VoIP) umfassen [RFC 3031, RFC 2460]. Mittels eines Shim-Headers bzw. MPLS-Headers werden jeweils nur 4 Byte induziert. Ein Shim-Header, auch MPLS-Header, umfasst neben dem Label, dass ca. 20 Bits ausmacht, weitere Status- und Verwaltungsinformationen. Grundsätzlich sind eine eindeutige Identifizierung des Punkt-zu-Punkt-Links mit seinen Eigenschaften, z. B. Quality of Service (QoS), sowie natürlich die des jeweiligen Bearers notwendig.

Bekannte Verfahren zur Reduzierung des Overhead bestehen aus einem rechenintensiven Kompressionsverfahren [RFC 2507] (price-rohc-epic-00.txt [www.ietf.org/internet-drafts]), das die einzelnen Komponenten bzw. Router unterstützen müssen. Diese Verfahren müssen während der Verbindung den dynamischen Status verwalten, wodurch viel Ressourcen (Memory, CPU) verbraucht werden und somit den Komponenten in der Leistungsfähigkeit Grenzen gesetzt werden. Bei einer Vielzahl von Endgeräten (mehrere tausend Handys), die von einer Komponente bedient werden müssen, kann es zu einer Überlastung des Systems kommen.

Miller B, "Label-Switching Technique Helps Transmit Voice over IP Networks", EMbedded Developers Journal, Oktober 2000, Seiten 1-5, URL:http://www.integralaccess.com/pdf/VoMPLS.pdf, offenbart ein Verfahren zur Header-Kompression, bei dem eine Datenübertragung mittels MPLS erfolgt, wobei ein zunächst vorhandener Netzwerk-Header in der Form eines IP-Headers aus dem Datenpaket entfernt wird. In dieser Druckschrift wird keine Aussage dahingehend getroffen, wie die Abbildung zwischen MPLS-Header und Netzwerk-Header stattfindet.

Es ist jedoch darauf hinzuweisen, dass die genannten Probleme nicht nur auf Netzwerke beschränkt sind, die mit mobilen Endgeräten betrieben werden. Vielmehr entsteht dieses Problem immer dann, wenn unterschiedliche Netzwerktopologien und Architekturen aufeinander treffen und ein Tunneln von Informationspaketen notwendig wird. Eine Beschränkung der vorliegenden Erfindung auf Mobilfunk-Netze ist nicht beabsichtigt.

Aufgabe der vorliegenden Erfindung ist es, ein Verfahren bereitzustellen, dass die Größe der Header reduziert.
Gelöst wird diese Aufgabe durch ein Verfahren und Vorrichtungen mit den Merkmalen der unabhängigen Ansprüche; die Erfindung wird insbesondere durch ein Verfahren zur Header-Kompression in paketorientierten Netzwerken gelöst, wobei das Netzwerk mindestens aus einem Empfänger und einem Sender besteht, zwischen denen Informationspakete mit Hilfe von MPLS-Headern ausgetauscht werden. Hierbei tunneln die Informationspakete ein weiteres Protokoll mit einem Netzwerk-Header, wobei die MPLS-Header durch eine bijektive Funktion aus den Netzwerk-Headern derart berechnet werden, dass eine eindeutige Abbildung eines MPLS-Headers auf den zweiten Netzwerk-Header möglich ist. Durch diese Abbildung ist es möglich, einen Header über einen gewissen Zeitraum zu entfernen. In einem ersten Init-Schritt wird im Empfänger eine zur bijektiven Funktion inverse Funktion zur Abbildung vom MPLS-Header auf die Netzwerk-Header bereitgestellt. Diese Bereitstellung kann durch ein Ereignis veranlasst werden, wie es weiter unten beschrieben wird. Nach der Bereitstellung, entfernt der Sender aus dem Informationspaket die

Netzwerk-Header des zweiten Protokolls und füllt den so gewonnenen Freiraum mit anderen Informationen, um dann das Informationspaket an den Empfänger zu senden. Hierdurch ist es möglich, das die Anzahl der zu versendenden Pakete stark reduziert wird.
In einem dritten Schritt ordnet der Empfänger die Netzwerk-Header dem Informationspaket auf der Basis der zur bijektiven Funktion inversen Funktion eindeutig zu. In einer weiter gehenden Ausführungsform kann der ursprüngliche MPLS-Header durch den Header oder auch nur durch Teile (Checknummern mögen z. B. erhalten bleiben) des getunnelten Protokolls ersetzt werden.

Um eine Synchronisation des Senders und Empfängers sicherzustellen, übermittelt der Empfänger nach Vollendung des Init-Schritts dem Sender hierüber eine Mitteilung. Ab diesem Zeitpunkt kann der Sender den Header oder auch nur Teile davon (Checknummern mögen z. B. erhalten bleiben) des ursprünglichen Netzwerkprotokolls entfernen.

Der Sender kann selbstständig entscheiden, wann er beabsichtigt, den ursprünglichen Header oder auch nur Teile davon zu entfernen. Diese Entscheidung kann der Sender nach Ablauf eines bestimmten Zeitraumes oder nach einer bestimmten Anzahl von erfolgreich übermittelten Netzwerkpaketen treffen. Es ist jedoch auch vorstellbar, dass der Sender dem Empfänger mitteilt, dass er beabsichtigt, die Header oder auch nur Teile davon aus dem Informationspaket zu entfernen. Das zweite Protokoll ist vorzugsweise IP, wobei die Header entweder IP-Versionen 4 oder IP-Versionen 6 sind. Im Idealfall, wenn das Netzwerk so aufgebaut ist, dass alle Pakete komplett durch MPLS geswitched werden können, also die Endpunkte jeweils eindeutig sind, ergibt sich die Möglichkeit, die vorher nötigen IP-Header zur korrekten Behandlung, d.h. Routing, im Netz über eine Logik auszutauschen, ohne dass Information zwischen den Punkt-zu-Punkt-Pfaden verloren geht. Nachdem das Paket beim Empfänger eingetroffen ist, ersetzt dieser die MPLS-Header durch eine Kopieroperation durch die ursprünglichen IP-Header oder auch nur Teile davon. Eine weitere Möglichkeit zur Bestimmung der Abbildung liegt darin, dass der Sender die zur bijektiven Funktion inverse Funktion zur Abbildung des IP-Headers oder auch nur von Teilen davon auf den MPLS-Header vor dem Entfernen des IP-Headers durch den Sender an den Empfänger überträgt. Bei dieser Kommunikation handelt es sich um eine Steuerinformation, die entweder Huckepack auf Dateninformationen oder durch ein separates Steuerinformationspaket übertragen wird.

Ein weiterer Bestandteil der vorliegenden Erfindung ist ein Sender in einem paketorientierten Netzwerk, wobei das Netzwerk mindestens aus einem Empfänger und einem Sender besteht, zwischen denen Informationspakete mit Hilfe von MPLS-Headern ausgetauscht werden. Die vom Sender gesendeten Informationspakete tunneln ein weiteres Protokoll mit einem Netzwerk-Header, wobei die MPLS-Header durch eine bijektive Funktion aus dem Netzwerk-Header berechnet wird, dass eine eindeutige Abbildung eines MPLS-Headers auf den zweiten Header möglich ist. Der Sender weist eine Bearbeitungseinheit auf, die in Abhängigkeit eines Ereignisses oder eines Zustandes den Netzwerk-Header des zweiten Protokolls aus dem Informationspaket entfernt und den so gewonnenen Freiraum mit anderen Informationen füllt, um dann das so modifizierte Informationspaket über eine Netzwerkschnittstelle an den Empfänger zu senden. Der Sender realisiert die bereits oben im Verfahren beschriebenen Schritte, die ihm zugeordnet sind. Die Überarbeitungseinheit ist vorzugsweise ein Prozessor oder ein Hochleistungs-Chip, wie er in Routern verwendet wird. Hier heißt dieser Chip Switching-Fabric. Die Ereignisse können intern verwaltet und erzeugt werden, oder sie werden von einem externen Geräte, wie dem Empfänger, übermittelt. So können die Ereignisse z. B. durch einen Interrupt erzeugt werden. Dieser Interrupt kann z. B. durch einen Timer ausgelöst werden. Eine weitere Möglichkeit besteht darin, einen Zähler zur Verfügung zu stellen, der die Anzahl von gesendeten und fehlerfreien Informationspaketen oder die Zustimmung des Empfängers aufbereitet, um dann in Abhängigkeit eines bestimmten Schwellenwertes ein Ereignis auszulösen.
In einer möglichen Ausführungsform übermittelt der Sender die zur bijektiven Funktion inverse Funktion zur Abbildung des MPLS-Headers auf den Netzwerk-Header durch eine Nachricht an den Empfänger. Hierzu wird ein entsprechendes Protokoll verwendet, dass eine Kommunikation zwischen Empfänger und Sender erlaubt. Das Senden erfolgt über eine entsprechende Netzwerkschnittstelle.
Der Sender hat vorzugsweise die Funktionalität und die Mittel, sich in IP-Netzen zu integrieren. Hierzu ist es notwendig, dass der Sender Netzwerk-Header im IP-Format erkennt, wobei es sich vorzugsweise um Ipv4 oder Ipv6 handeln kann.
Bei Verwendung einer Switching-Fabric hat der Sender vorzugsweise ebenfalls die Funktionalität und Mittel eines Routers. Es kann sich jedoch auch um ein Endgerät oder um ein Gateway handeln.
Die Abbildung der MPLS-Header auf die Netzwerk-Header wird durch eine Funktion realisiert. Hierbei handelt es sich um eine bijektive Funktion, für die es ebenfalls.eine einfache und schnell berechenbare inverse Funktion gibt. Der MPLS-Header wird durch eine bijektive Funktion aus dem Netzwerk-Header berechnet. Die Funktion hat den Vorteil, dass die Abbildungen nicht in einer Tabelle vorgehalten werden müssen. Hierdurch ist es möglich, einen größeren Speicherbereich einzusparen.

Ein weiterer Bestandteil der vorliegenden Erfindung ist ein Empfänger, der die gegensätzliche Funktionalität des Senders aufweist, wie sie bereits im Verfahren oben beschrieben wurde. Der Empfänger verwendet eine bijektive Funktion, die den entsprechenden Header berechnet. Hierbei ist es natürlich notwendig, dass eine entsprechende inverse Funktion beim Sender vorhanden ist.
Ein weiterer Bestandteil des Empfängers ist eine Bearbeitungseinheit, die den Netzwerk-Header des zweiten Protokolls dem Informationspaket zuordnet, das einen entsprechenden MPLS-Header aufweist. Bei dieser Bearbeitungseinheit handelt es sich vorzugsweise um einen Prozessor oder auch um eine Switching-Fabric, wie sie z. B. in Routern verwendet wird. Es können jedoch auch spezielle Chips verwendet werden, die speziell auf die Suche und das Entfernen bzw. Ersetzen von Headern optimiert sind.
Insbesondere wenn das Paket noch weitergeleitet werden soll oder einer weiter gehenden Verarbeitung zugeführt werden sollte, die lediglich IP-Header annehmen kann, ersetzt der Empfänger die MPLS-Header im Informationspaket durch die Netzwerk-Header, indem die Netzwerk-Header in den Bereich kopiert werden, der für den MPLS-Header bestimmt war, um dann ggf. das so modifizierte Informationspaket über eine Netzwerkschnittstelle weiterzuleiten.
In einer weitergehenden Ausführungsform analysiert der Empfänger mit Hilfe der Bearbeitungseinheit die eintreffenden Informationspakete, um festzustellen, ob ein Netzwerk-Header bereits entfernt wurde. Durch diesen Ansatz ist es nicht notwendig, dass sich der Sender und Empfänger über den Beginn und das Ende der optimierten Kommunikation austauschen. So könnte z. B. durch ein bestimmtes Statusbit oder ein anderes Muster dem Empfänger mitgeteilt werden, dass der Sender den Header entfernt hat.
Die Bearbeitungseinheit kann ebenfalls so ausgelegt sein, dass eintreffende Informationspakete analysiert werden, um festzustellen, ob ein Netzwerk-Header bereits entfernt wurde.

Wie bereits beim Sender beschrieben, kann das Austauschen des Headers in Abhängigkeit eines Ereignisses oder eines Zustandes vorgenommen werden. Mögliche Ereignisse sind der Ablauf eines vorzugsweise synchronisierten Timers, eine bestimmte Anzahl von empfangenen und fehlerfreien Informationspaketen oder eine entsprechende Mitteilung des Senders.
Die Abbildung kann ebenfalls durch den Sender bestimmt werden, der dann durch eine entsprechende Mitteilung in Form eines Informationspaketes an den Empfänger die Abbildung übermittelt.
Der Empfänger unterstützt ebenfalls IP vorzugsweise in den Versionen 4 und 6.

Damit die Abbildung eindeutig ist, sind eine eindeutige Identifizierung des Punkt-zu-Punkt-Links bzw. -Pfads mit seinen Eigenschaften (z.B. QoS) sowie natürlich die des jeweiligen Bearers notwendig, soweit es sich um ein Mobilfunknetz handelt. Bearer sind Dienste im Mobilfunkbereich, die Verbindungen auf unterschiedlichen Ebenen darstellen. Um weitere zusätzliche Informationen zu transportieren, die unter Umständen durch den MPLS-Header nicht abgedeckt werden können, wird ein weiterer MPLS-Header auf den Stack des Informationspaketes beschrieben, der weitere Informationen umfasst. Wie bereits oben beschrieben, kann hierzu das Stacking verwendet werden. Dazu reichen allerdings zwei oder mehr MPLS-Header bei weitem aus, wobei nur ein MPLS-Header verbindungsspezifische Bedeutung haben muss. Der andere MPLS-Header ist sogar netzwerkweit dynamisch verwendbar und man ist nicht nur auf MPLS begrenzt (e. g. PPP).
Die äußeren Header dienen zur Identifizierung des Punkt-zu-Punkt-Links und seiner Eigenschaften, wie sie im IPv6 Header angefordert werden. Diese können, wenn nötig, vom Netz verändert werden, solange der Link-Scope bei der Endkomponete nicht zerstört wird. Die inneren Header dienen der Identifizierung des Bearers. Der Grundgedanke besteht darin, dass intern nun die MPLS-Header wieder eineindeutig einem IPv6 Header zugeordnet bzw. durch diesen ersetzt werden können, womit die Architektur-Eigenschaften und Vorteile, welche aus IPv6 resultieren, vollständig erhalten bleiben. Der IP Header kann also einfach entfernt werden.
Um das Mapping IPv6 auf MPLS-Header und umgekehrt dem jeweiligen Linkendpunkt mitzuteilen, können nun standardisierte Protokolle (z.B. LDP, [RFC 3036]) verwendet werden oder eine Punkt-zu-Punkt-Vereinfachung angewandt werden. Entsprechende Vereinfachungen wurden bereits oben beschrieben.
Eine wichtige Ausprägung ist die Entfernung von nur Teilen des IP-Headers; Security Headers können z. B. einfach unangetastet bleiben und somit werden Security Beziehungen nicht zerstört. Wie die Pakete jeweils gehandhabt werden, kann entweder durch eine Eindeutigkeit und Analyse im Netz festgestellt werden oder durch einfache Nachrichten signalisiert werden.
In einer weiteren Ausführungsformen wird nicht der vollständige Header entfernt, sondern lediglich Bestandteile von diesem. So kann z. B. nur der Addressbereich entfernt werden, der dann später wieder eingesetzt wird. Der Addressbereich umfasst nicht nur die Adresse des Empfängers, sondern auch die Adresse des Senders bzw. den Weg dorthin.

Weitere Ausführungsformen sind den Unteransprüchen zu entnehmen. Im Folgenden wird anhand von Figuren ein Ausführungsbeispiel beschrieben. Es zeigt:

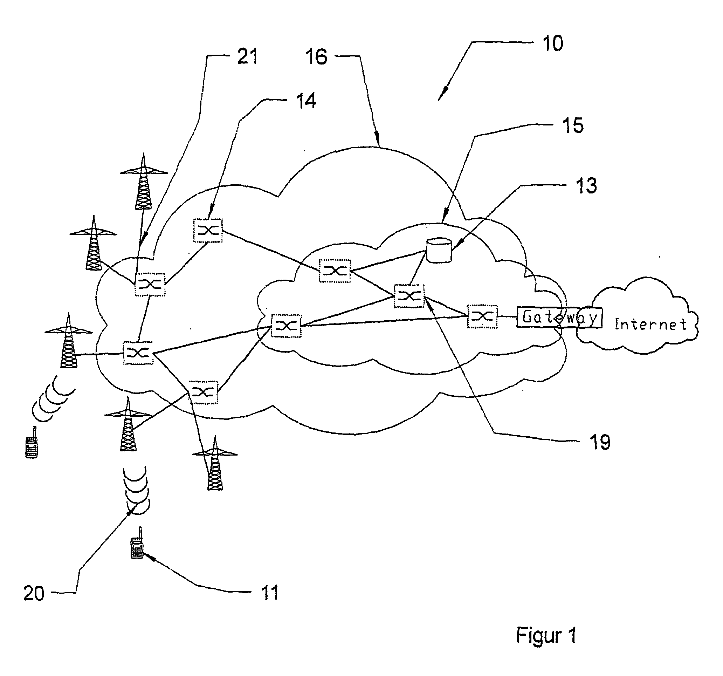

- Figur 1: ein Netzwerk, bestehend aus einem Radio-Access-Netzwerk und einem Core-Netzwerk, das über ein Gateway mit dem Internet verbunden ist, wobei das Radio-Access-Netzwerk über UPS Verbindungen zu Basisstationen herstellt, die wiederum mit Endgeräten in Funkkontakt stehen, wobei UPS und Basisstationen, falls sie in einem örtlich geringen Abstand angeordnet sind, einer Multicast-Gruppe angehören;

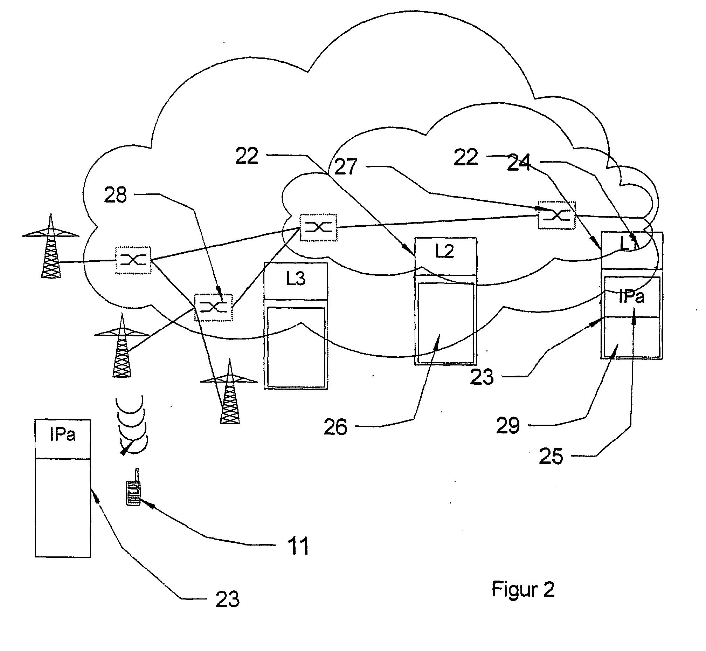

- Figur 2: einen Ausschnitt aus Figur 1, wobei das erfindungsgemäße Verfahren angewandt wird, mit einem Sender, der bereits ein Informationspaket mit einem MPLS-Header empfängt, wobei ein vollständiges IP-Informationspaket mit einem IP-Header getunnelt ist und der Sender den IP-Header entfernt, um das Informationspaket lediglich mit einem MPLS-Header an den Empfänger weiterzuleiten, wobei der Empfänger das Informationspaket vom MPLS-Header befreit und den ursprünglichen IP-Header einsetzt.

Die Figur 1 zeigt einen grundsätzlichen Aufbau eines Netzwerks im Funkbereich. Eine Netzwerkarchitektur 10 besteht hierbei aus einem Radio-Access-Netzwerk 16 und einem Core-Netzwerk 15. Das Core-Netzwerk 15 stellt über einen Gateway die Verbindung zum Internet her. Beide Netzwerke bestehen aus einer Reihe von Komponenten 19, 13, 12, 14.
Ein User-Plane-Server (UPS) 14 verwaltet das Funkprotokoll 20, um Informationspakete über Funkschnittstellen zum Endgerät 11 zu transportieren. Ein Radio-Control-Server (RCS) verwaltet das Frequenzband und erlaubt die Zuteilung bzw. lehnt die Zuteilung von Frequenzen ab, falls ein Engpass entstehen sollte. Diese beiden Komponenten, die auch Routerfunktionalitäten aufweisen, bilden mit den entsprechenden Kabelverbindungen das Radio-Access-Netzwerk 16.

Das Core-Netzwerk umfasst wiederum Router 19, die mit dem UPS in Verbindung stehen. Ein HLR (Home-Location-Register) 13 verwaltet die eindeutige Kennung des Endgerätes und seine aktuelle Position. Diese Position ist jedoch lediglich eine Regionsangabe. Weiterhin verwaltet das HLR/HSS die Rufnummern und die aktuelle IP-Adresse.
Die Komponenten des Core-Netzwerkes und des Radio-Access-Netzwerkes sind über Glasfaserkabel oder Kupferkabel 21 miteinander verbunden. Es ist jedoch denkbar, dass diese Komponenten durch eine Richtfunkverbindung miteinander in Kontakt stehen.

Figur 2 zeigt den grundsätzlichen Ablauf des erfindungsgemäβen Verfahrens. Ein Sender 27 empfängt ein Informationspaket 22, das einen MPLS-Header 24 aufweist. Dieses Informationspaket 22 tunnelt ein weiteres Informationspaket 23, dass einen IP-Header 25 aufweist. Der daraus entstehende Datenbereich 29 ist ausgesprochen gering. Der Sender 27 entfernt nun den IP-Header 25 und fügt weitere Informationen hinzu, sodass der Datenbereich 29 größer ausfällt. Das so modifizierte Paket wird über einen weiteren Router, der den MPLS-Header entsprechend des Standards modifiziert, weitergeleitet zum Empfänger 28. Der Empfänger 28 entfernt nun den MPLS-Header 24 und ersetzt diesen durch einen IP-Header. Die Abbildung des MPLS-Headers auf den IP-Header wird vom Empfänger durch eine einfache bijektive Funktion erzeugt. Die Verfahren zum Austausch der Abbildung wurden bereits oben beschrieben. Es wurde ebenfalls beschrieben, zu welchem Zeitpunkt das Entfernen der IP-Header vom Sender erfolgen kann. Auf Grund des variierenden Datenbereichs 29, kann es passieren, dass mehrere Pakete zusammengefasst werden oder auseinandergerissen werden. Eine entsprechende Nummerierung dieser Pakete ist Stand der Technik.

## Patentansprüche

1. Verfahren zur Header-Kompression in paketorientierten Netzwerken, wobei das Netzwerk mindestens aus einem Empfänger und einem Sender besteht, zwischen denen Informationspakete mit Hilfe von MPLS-Headern ausgetauscht werden, wobei die Informationspakete ein weiteres Protokoll mit einem Netzwerk-Header tunneln, wobei die MPLS-Header durch eine bijektive Funktion aus den Netzwerk-Headern derart berechnet werden, dass eine eindeutige Abbildung eines MPLS-Headers auf den zweiten Netzwerk-Header möglich ist,
- mit einem ersten Init-Schritt, bei dem im Empfänger eine zur bijektiven Funktion inverse Funktion zur Abbildung vom MPLS-Header auf die Netzwerk-Header bereitgestellt wird, wobei ein Netzwerk-Header durch die zur bijektiven Funktion inverse Funktion aus dem MPLS-Header berechnet wird,
- mit einem zweiten Schritt, bei dem der Sender nach dem Init-Schritt aus dem Informationspaket die Netzwerk-Header des zweiten Protokolls oder Teile davon entfernt und den so gewonnenen Freiraum mit anderen Informationen füllt, um dann das Informationspaket an den Empfänger zu senden,
- mit einem dritten schritt, bei dem der Empfänger die Netzwerk-Header dem Informationspaket auf der Basis der gespeicherten Abbildung eindeutig zuordnet.

2. Verfahren nach dem vorhergehenden Anspruch, **dadurch gekennzeichnet, dass** der Empfänger nach Vollendung des Init-Schritts dem Sender hierüber eine Mitteilung zukommen lässt.

3. Verfahren nach einem oder mehreren der vorhergehenden Ansprüche, **dadurch gekennzeichnet, dass** der Sender nach Ablauf eines bestimmten Zeitraumes die Netzwerk-Header des zweiten Protokolls entfernt.

4. Verfahren nach einem oder mehreren der vorhergehenden **Ansprüche, dadurch gekennzeichnet, dass** der Sender dem Empfänger mitteilt, dass er die NetzwerkHeader des zweiten Protokolls in den zukünftigen Informationspaketen entfernt.

5. Verfahren nach einem oder mehreren der vorhergehenden Ansprüche, **dadurch gekennzeichnet, dass** das zweite Protokoll IP ist, wobei die Header entweder IP-Versionen 4 oder IP-Versionen 6 sind.

6. Verfahren nach einem oder mehreren der vorhergehenden Ansprüche, **dadurch gekennzeichnet, dass** der Empfänger den MPLS-Header durch eine Kopieroperation durch den ursprünglichen IP-Header ersetzt.

7. Verfahren nach einem oder mehreren der vorhergehenden Ansprüche, **dadurch gekennzeichnet, dass** die zur bijektiven Funktion inverse Funktion zur Abbildung des IP-Headers auf den MPLS-Header vor dem Entfernen des IP-Headers durch den Sender an den Empfänger übertragen wird.

8. Verfahren nach einem oder mehreren der vorhergehenden Ansprüche, **dadurch gekennzeichnet, dass** mehrere MPLS-Header, die auf dem Stack liegen, zur Abbildung des Netzwerk-Headers dienen.

9. Verfahren nach einem oder mehreren der vorhergehenden Ansprüche, **dadurch gekennzeichnet, dass** nur Teile des Netzwerk-Headers durch MPLS-Header ersetzt werden, insbesondere nur die Empfängeradresse.

10. Sender in einem paketorientierten Netzwerk, wobei das Netzwerk mindestens aus einem Empfänger und einem Sender besteht, zwischen denen Informationspakete mit Hilfe von MPLS-Headern ausgetauscht werden, wobei die Informationspakete ein weiteres Protokoll mit einem Netzwerk-Header tunneln, wobei die MPLS-Header so gewählt sind, dass eine eindeutige Abbildung eines MPLS-Headers auf den zweiten Header möglich ist, **dadurch gekennzeichnet, dass** der MPLS-Header durch eine bijektive Funktion aus dem Netzwerk-Header berechnet wird und der Sender eine Bearbeitungseinheit aufweist, die in Abhängigkeit eines Ereignisses oder eines Zustandes den Netzwerk-Header des zweiten Protokolls aus dem Informationspaket entfernt und den so gewonnenen Freiraum mit anderen Informationen füllt, um dann das so modifizierte Informationspaket über eine Netzwerkschnittstelle an den Empfänger zu senden.

11. Sender nach dem vorhergehenden Anspruch, **dadurch gekennzeichnet, dass** das Ereignis der Ablauf eines Timers ist, eine bestimmte Anzahl von gesendeten und fehlerfreien Informationspaketen und/oder eine Zustimmung des Empfängers.

12. Sender nach einem oder mehreren der vorhergehenden Ansprüche, **dadurch gekennzeichnet, dass** die zur bijektiven Funktion inverse Funktion zur Abbildung des MPLS-Headers auf den Netzwerk-Header durch eine Nachricht an den Empfänger übermittelt wird.

13. Sender nach einem oder mehreren der vorhergehenden Ansprüche, **dadurch gekennzeichnet, dass** der Netzwerk-Header für einen IP-Header steht, wobei es sich um Ipv4 oder Ipv6 handeln kann.

14. Sender nach einem oder mehreren der vorhergehenden Ansprüche, **gekennzeichnet durch** Mittel, die die Funktionalität eines Routers realisieren.

15. Sender nach einem oder mehreren der vorhergehenden Ansprüche, **dadurch gekennzeichnet, dass** nur Teile des Netzwerk-Headers durch MPLS-Header ersetzt werden, insbesondere nur die Empfängeradresse.

16. Empfänger in einem paketorientierten Netzwerk, wobei das Netzwerk mindestens aus einem Empfänger und einem Sender besteht, zwischen denen Informationspakete mit Hilfe von MPLS-Headern ausgetauscht werden, wobei die Informationspakete ein weiteres Protokoll mit einem Netzwerk-Header tunneln, wobei die MPLS-Header so gewählt sind, dass eine eindeutige Abbildung eines MPLS-Headers auf den zweiten Netzwerk-Header möglich ist,
**gekennzeichnet durch**
die Bereitstellung einer bijektiven Funktion zur Abbildung des MPLS-Headers auf den Netzwerk-Header, wobei der Netzwerk-Header **durch** die bijektive Funktion aus dem MPLS-Header berechnet wird,
eine Bearbeitungseinheit, die den Netzwerk-Header des zweiten Protokolls dem Informationspaket zuordnet, das einen entsprechenden MPLS-Header aufweist.

17. Empfänger nach dem vorhergehenden Anspruch,
**dadurch gekennzeichnet, dass** der MPLS-Header im Informationspaket durch die Netzwerk-Header ersetzt wird, indem die Netzwerk-Header in den Bereich kopiert werden, der für den MPLS-Header bestimmt war, um dann ggf. das so modifizierte Informationspaket über eine Netzwerkschnittstelle weiterzuleiten.

18. Empfänger nach einem oder mehreren der vorhergehenden Ansprüche, **dadurch gekennzeichnet, dass** die Bearbeitungseinheit eintreffende Informationpakete analysiert, um festzustellen, ob ein Netzwerk-Header bereits entfernt wurde.

19. Empfänger nach einem oder mehreren der vorhergehenden
Ansprüche, **dadurch gekennzeichnet, dass** die Analyse der Informationspakete auf der Basis von BitMustern erfolgt.

20. Empfänger nach einem oder mehreren der vorhergehenden Ansprüche, **dadurch gekennzeichnet, dass** die Abbildung des MPLS-Headers auf den Netzwerk-Header in Abhängigkeit eines Ereignisses oder eines Zustandes vorgenommen wird, wobei das Ereignis der Ablauf eines vorzugsweise synchronisierten Timers ist, eine bestimmte Anzahl von empfangenen und fehlerfreien Informationspaketen oder eine entsprechende Mitteilung des Senders.

21. Empfänger nach einem oder mehreren der vorhergehenden Ansprüche, **dadurch gekennzeichnet, dass** die Netzwerk-Header für ein IP steht, wobei es sich um Ipv4 oder Ipv6 handeln kann.

22. Empfänger nach einem oder mehreren der vorhergehenden Ansprüche, **gekennzeichnet, durch** Mittel, die die Funktionalität eines Routers bereitstellen.

23. Empfänger nach einem oder mehreren der vorhergehenden Ansprüche, **dadurch gekennzeichnet, dass** nur Teile des Netzwerk-Headers durch MPLS-Header ersetzt werden, insbesondere nur die Empfängeradresse.

## Claims

1. Method for header compression in packet-oriented networks, in which the network consists of at least one receiver and one transmitter, between which information packets are exchanged with the aid of MPLS headers, with the information packets tunnelling a further protocol with a network header, with the MPLS headers being calculated by a bijective function from the Network header in such a way that a unique mapping of an MPLS header to the second network header is possible,
- with a first init step in which an inverse function for the bijective function for a mapping of the MPLS header to the network header is stored in the receiver, whereby a network header is calculated by the inverse function for the bijective function from the MPLS header
- with a second step in which the transmitter, after the init step, removes the network header or parts of it from the information packet and fills the free space thus obtained with other information, in order to then transmit the information packet to the receiver,
- with a third step in which the receiver uniquely assigns the network header to the information packet on the basis of the stored mapping.

2. Method in accordance with the preceding Claim, **characterised in that** the receiver has a message sent to the transmitter to notify it of completion of the init step.

3. Method in accordance with one or more of the preceding Claims, **characterised in that** the transmitter, after a specific period of time has elapsed, removes the network header of the second protocol.

4. Method in accordance with one or more of the preceding Claims, **characterised in that** the transmitter notifies the receiver that it is removing the network header of the second protocol in the future information packets.

5. Method in accordance with one or more of the preceding Claims,
**characterised in that** the second protocol is IP, with the headers either being IP versions 4 or IP versions 6.

6. Method in accordance with one or more of the preceding Claims, **characterised in that** the receiver replaces the MPLS header with the original IP header in a copying operation.

7. Method in accordance with one or more of the preceding Claims, **characterised in that** the inverse function for the bijective function for the mapping of the IP headers to the MPLS header is transmitted before removal of the IP by the transmitter to the receiver.

8. Method in accordance with one or more of the preceding Claims, **characterised in that**, a number of MPLS headers which are on the stack are used to map the network header.

9. Method in accordance with one or more of the preceding Claims, **characterised in that** only parts of the network header are replaced by MPLS headers, especially only the receiver address.

10. Transmitter in a packet-oriented network, with the network consisting of at least one receiver and one transmitter between which information packets are exchanged with the aid of MPLS headers, with the information packets tunnelling a further protocol with a network header, with the MPLS header being selected so that unique mapping of an MPLS header to the second header is possible, **characterised in that** the MPSL header is calculated by a bijective function from the Network header, and the transmitter features a processing unit which, depending on an event or a state, removes the network header of the second protocol from the information packet and fills the free space thus obtained with other information in order to send the information packet modified in this way over a network interface to the receiver.

11. Transmitter in accordance with the preceding Claim, **characterised in that** the event is the expiry of a timer, a specific number of sent and error-free information packets and/or an authorization by the receiver.

12. Transmitter in accordance with one or more of the preceding Claims, **characterised in that** the inverse function for the bijective function for the mapping of the MPLS header to the network header is transmitted by a message to the receiver.

13. Transmitter in accordance with one or more of the preceding Claims, **characterised in that** the network header stands for an IP header, in which case it can be Ipv4 or Ipv6.

14. Transmitter in accordance with one or more of the preceding Claims, **characterised by** means which implement the functionality of a router.

15. Transmitter in accordance with one or more of the preceding Claims, **characterised in that** only parts of the network header are replaced by the MPLS header, in particular the receiver address.

16. Receiver in a packet-oriented to network where the network consists of at least one receiver and one transmitter, between which information packets are exchanged with the aid of MPLS headers, in which case the information packets tunnel a further protocol with a network header, with the MPLS headers being selected so that a unique mapping of an MPLS header to the second network header is possible,
**characterised by**
the provision of a bijective function for the mapping of the MPLS header to the network header, whereby the network header is calculated by the bijective function from the MPLS header a processing unit which assigns the network header of the second protocol to the information packet which features a corresponding MPLS header.

17. Receiver in accordance with the preceding Claim, **characterised in that** the MPLS header in the information packet is replaced by the network header, by the network header being copied into the area which was intended for the MPLS header in order for it to then forward the information packet modified in this way over the network interface.

18. Receiver in accordance with one or more of the preceding Claims, **characterised in that** information packets arriving at the processing unit are analyzed to determine whether a network header has already been removed.

19. Receiver in accordance with one or more of the preceding Claims, **characterised in that** the analysis of the information packets is undertaken on the basis of bit patterns.

20. Receiver in accordance with one or more of the preceding Claims, **characterised in that** the mapping of the MPLS header to the network header is undertaken depending on an event or a state, in which case the event is the expiry of a preferably synchronised timer, a specific number of received and error-free information packets or a corresponding notification of the transmitter.

21. Receiver in accordance with one or more of the preceding Claims, **characterised in that** the network header stands for an IP header, in which case it can be Ipv4 or Ipv6.

22. Receiver in accordance with one or more of the preceding Claims, **characterised by** means which provide the functionality of a router.

23. Receiver in accordance with one or more of the preceding Claims, **characterised in that** only parts of the network header are replaced by MPLS headers, in particular only the receiver address. only parts of the network header are replaced by MPLS headers, especially only the receiver address.

## Revendications

1. Procédé de compression d'en-têtes dans des réseaux orientés paquets, le réseau se composant au moins d'un récepteur et d'un émetteur entre lesquels des paquets d'informations sont échangés à l'aide d'en-têtes MPLS, les paquets d'informations tunnelant un autre protocole avec un en-tête de réseau, les en-têtes MPLS étant calculés par une fonction bijective à partir des en-têtes de réseau de manière telle qu'une application univoque d'un en-tête MPLS sur le deuxième en-tête de réseau est possible,
- avec une première étape Init dans laquelle une fonction pour l'application de l'en-tête MPLS sur l'en-tête de réseau, laquelle fonction est inverse à la fonction bijective, est mise à disposition dans le récepteur, un en-tête de réseau étant calculé par la fonction inverse à la fonction bijective à partir de l'en-tête MPLS,
- avec une deuxième étape dans laquelle l'émetteur, après l'étape Init, retire hors du paquet d'informations les en-têtes de réseau du deuxième protocole ou des parties de ceux-ci et remplit l'espace libre ainsi obtenu avec d'autres informations pour ensuite envoyer le paquet d'informations au récepteur,
- avec une troisième étape dans laquelle le récepteur affecte univoquement les en-têtes de réseau au paquet d'informations sur la base de l'application enregistrée.

2. Procédé selon la revendication précédente, **caractérisé en ce que** le récepteur, après que l'étape Init est terminée, fait parvenir à l'émetteur une communication à ce sujet.

3. Procédé selon l'une ou plusieurs des revendications précédentes, **caractérisé en ce que** l'émetteur retire les en-têtes de réseau du deuxième protocole après l'écoulement d'un espace de temps déterminé.

4. Procédé selon l'une ou plusieurs des revendications précédentes, **caractérisé en ce que** l'émetteur communique au récepteur qu'il retire les en-têtes de réseau du deuxième protocole dans les paquets d'informations à venir.

5. Procédé selon l'une ou plusieurs des revendications précédentes, **caractérisé en ce que** le deuxième protocole est IP, les en-têtes étant soit des versions IP 4 soit des versions IP 6.

6. Procédé selon l'une ou plusieurs des revendications précédentes, **caractérisé en ce que** le récepteur remplace l'en-tête MPLS par l'en-tête IP d'origine par une opération de copiage.

7. Procédé selon l'une ou plusieurs des revendications précédentes, **caractérisé en ce que** la fonction pour l'application de l'en-tête IP sur l'en-tête MPLS, laquelle fonction est inverse à la fonction bijective, est transmise au récepteur avant le retrait de l'en-tête IP par l'émetteur.

8. Procédé selon l'une ou plusieurs des revendications précédentes, **caractérisé en ce que** plusieurs en-têtes MPLS qui se trouvent sur la pile servent à l'application de l'en-tête de réseau.

9. Procédé selon l'une ou plusieurs des revendications précédentes, **caractérisé en ce que** seules des parties de l'en-tête de réseau sont remplacées par des en-têtes MPLS, en particulier uniquement l'adresse de destination.

10. Émetteur dans un réseau orienté paquets, le réseau se composant au moins d'un récepteur et d'un émetteur entre lesquels des paquets d'informations sont échangés à l'aide d'en-têtes MPLS, les paquets d'informations tunnelant un autre protocole avec un en-tête de réseau, les en-têtes MPLS étant sélectionnés de manière telle qu'une application univoque d'un en-tête MPLS sur le deuxième en-tête est possible, **caractérisé en ce que** l'en-tête MPLS est calculé par une fonction bijective à partir de l'en-tête de réseau et l'émetteur comporte une unité de traitement qui retire hors du paquet d'informations l'en-tête de réseau du deuxième protocole en fonction d'un événement ou d'un état et remplit l'espace libre ainsi obtenu avec d'autres informations pour alors envoyer le paquet d'informations ainsi modifié au récepteur via une interface réseau.

11. Émetteur selon la revendication précédente, **caractérisé en ce que** l'événement est l'expiration d'un timer, un nombre déterminé de paquets d'informations émis et exempts d'erreurs et/ou une autorisation du récepteur.

12. Émetteur selon l'une ou plusieurs des revendications précédentes, **caractérisé en ce que** la fonction pour l'application de l'en-tête MPLS sur l'entête de réseau, laquelle fonction est inverse à la fonction bijective, est transmise au récepteur par un message.

13. Émetteur selon l'une ou plusieurs des revendications précédentes, **caractérisé en ce que** l'en-tête de réseau représente un en-tête IP tout en sachant qu'il peut s'agir d'Ipv4 ou d'Ipv6.

14. Émetteur selon l'une ou plusieurs des revendications précédentes, **caractérisé par** des moyens qui réalisent la fonctionnalité d'un routeur.

15. Émetteur selon l'une ou plusieurs des revendications précédentes, **caractérisé en ce que** uniquement des parties de l'en-tête de réseau sont remplacées par des en-têtes MPLS, en particulier uniquement l'adresse de destination.

16. Récepteur dans un réseau orienté paquets, le réseau se composant au moins d'un récepteur et d'un émetteur entre lesquels des paquets d'informations sont échangés à l'aide d'en-têtes MPLS, les paquets d'informations tunnelant un autre protocole avec un en-tête de réseau, les en-têtes MPLS étant sélectionnés de manière telle qu'une application univoque d'un en-tête MPLS sur le deuxième en-tête de réseau est possible, **caractérisé par**
la mise à disposition d'une fonction bijective pour l'application de l'en-tête MPLS sur l'en-tête de réseau, l'en-tête de réseau étant calculé par la fonction bijective à partir de l'en-tête MPLS;
une unité de traitement qui affecte l'en-tête de réseau du deuxième protocole au paquet d'informations qui comporte un en-tête MPLS correspondant.

17. Récepteur selon la revendication précédente, **caractérisé en ce que** l'entête MPLS est remplacé par les en-têtes de réseau dans le paquet d'informations par copiage des en-têtes de réseau dans la zone qui était destinée à l'en-tête MPLS pour alors réacheminer, le cas échéant, le paquet d'informations ainsi modifié via une interface réseau.

18. Récepteur selon l'une ou plusieurs des revendications précédentes, **caractérisé en ce que** l'unité de traitement analyse des paquets d'informations entrants pour établir si un en-tête de réseau a déjà été retiré.

19. Récepteur selon l'une ou plusieurs des revendications précédentes, **caractérisé en ce que** l'analyse des paquets d'informations se fait sur la base de modèles binaires.

20. Récepteur selon l'une ou plusieurs des revendications précédentes, **caractérisé en ce que** l'application de l'en-tête MPLS sur l'en-tête de réseau est opérée en fonction d'un événement ou d'un état, l'événement étant l'expiration d'un timer de préférence synchronisé, un nombre déterminé de paquets d'informations émis et exempts d'erreurs ou une communication correspondante de l'émetteur.

21. Récepteur selon l'une ou plusieurs des revendications précédentes, **caractérisé en ce que** l'en-tête de réseau représente un en-tête IP tout en sachant qu'il peut s'agir d'Ipv4 ou d'Ipv6.

22. Récepteur selon l'une ou plusieurs des revendications précédentes, **caractérisé par** des moyens qui mettent à disposition la fonctionnalité d'un routeur.

23. Récepteur selon l'une ou plusieurs des revendications précédentes, **caractérisé en ce que** uniquement des parties de l'en-tête de réseau sont remplacées par des en-têtes MPLS, en particulier uniquement l'adresse de destination.
